# EUROPEAN PATENT SPECIFICATION

(11) **EP 2 642 807 B1**
(45) Date of publication and mention of the grant of the patent: **07.12.2016**
(21) Application number: 11870847.8
(22) Date of filing: 12.08.2011
(51) Int. Cl.: H04W 68/00, H04W 76/06, H04W 68/12, H04W 28/02, H04W 72/12, H04W 88/06, H04W 68/02

(54) **MOBILE TERMINAL AND SERVICE PROCESSING METHOD THEREOF, AND BASEBAND PROCESSING CHIP**
MOBILES ENDGERÄT UND DIENSTVERARBEITUNGSVERFAHREN DAFÜR SOWIE BASISBAND-VERARBEITUNGSCHIP
TERMINAL MOBILE, PROCÉDÉ DE TRAITEMENT DE SERVICE CORRESPONDANT ET PUCE DE TRAITEMENT DANS LA BANDE DE BASE

(43) Date of publication of application: 25.09.2013
(73) Proprietor: Spreadtrum Communications (Shanghai) Co., Ltd., Zhangjiang High Tech Park Podong District Shanghai 201203 (CN)
(72) Inventor: ZHANG, Zhi, Shanghai 201203 (CN); LIU, Jiwu, Shanghai 201203 (CN); CHEN, Xianliang, Shanghai 201203 (CN); XU, Yuan, Shanghai 201203 (CN); GAO, Xichun, Shanghai 201203 (CN); LU, Wenbo, Shanghai 201203 (CN); SHI, Yanshan, Shanghai 201203 (CN); ZHANG, Ma, Shanghai 201203 (CN); HU, Yingping, Shanghai 201203 (CN)
(74) Representative: Westphal, Mussgnug & Partner Patentanwälte mbB
(86) International application number: PCT/CN2011/078341
(87) International publication number: WO 2013/023342

(56) References cited:
- WO-A1-2005/101765
- WO-A1-2005/104600
- CN-A- 101 179 796
- CN-A- 101 895 845
- CN-A- 101 977 420
- CN-A- 102 026 374
- GB-A- 2 381 418
- US-A1- 2011 280 166

## Description

### Field of Technology

The present invention relates to the communication techniques. Particularly, it relates to a mobile terminal and service processing method thereof, and a baseband processing chip.

### Technical Background

Currently, users of a mobile communication system may register with a mobile communication network and enjoy various communication services provided by the mobile communication network through inserting user cards in their mobile terminals. Most of the existing mobile terminals employ a single user card scheme, in which only one user card can be used on a mobile terminal by a user simultaneously. However, with the increased demands by the users in their working and daily life, there is a need to use multiple user cards simultaneously by a user to satisfy such demands, leading to the emergence of multi-card multi-standby mobile terminals. A multi-card multi-standby mobile terminal refers to a mobile terminal having two or more user cards inserted simultaneously, and the multiple user cards can be in standby mode at the same time. The emergence of the multi-card multi-standby mobile terminals provides a lot of convenience for people's working and life.

Most of the existing multi-card multi-standby mobile terminals are dual-card dual-standby mobile terminals having two user cards inserted therein, which can be realized based on a single RF (radio frequency) single baseband scheme. In the single RF single baseband scheme, it is based on a set of chips to realize two user cards in standby mode simultaneously. For example, in Chinese invention patent application with publication No.: CN101217745A, a dual-card dual-standby mobile phone with single chip is provided, it comprising: a RF module, a baseband processing chip, two Subscriber Identity Module (SIM) slots. Through a SIM interface, the baseband processing chip is connected to an electric switch which is connected to the two SIM slots simultaneously. And the electric switch is controlled through a chip select control circuit. The chip select control circuit is driven according to particular services of the mobile phone, selecting different SIM cards.

During the practice of the invention, the inventors have found that the existing single RF single baseband scheme has at least the following problems:
Because only one RF chip is provided, in order to guarantee that the two cards reside in their respective cells simultaneously, the RF chip is required to be able to receive system messages, paging messages on the working carriers of the two SIM cards periodically. However, no matter whether the two carriers belong to the same operator or different operators, because the fact that it has not been considered to receive two carriers with the same RF chip simultaneously when the GSM (Global System for Mobile Communication, hereinafter "GSM") network is designed, especially in the case that the carriers belong to two different operators. Meanwhile, if there is a larger interval between the two carriers, it is difficult to receive different carriers by the same RF chip simultaneously, and this may cause conflicts between a PS (Packet Switched, hereinafter "PS") domain services on one SIM card and other services except the PS domain service on other SIM cards, making it unable to process high real time services in time, such as CS (circuit Switched, hereinafter "CS") domain services on other SIM cards, during performing PS domain service on one SIM card. Thus it leads to an increased failure rate of high real time services on the other SIM cards.

For example, during performing a PS domain service on a SIM card, the other SIM card is unable to receive a CS domain paging message, as a result, it is unable to normally handle a CS domain communication service or to perform update of location area based on the CS domain paging message. If the location of the mobile terminal has changed during performing a PS domain service on one of the SIM cards, the location area update can not be performed, which may cause the other SIM card in a step-out state with the mobile communication network. It will further cause serious off-network phenomena for the other SIM card and an increased failure rate of its subsequent services.

WO 2005/101765A1 relates to methods in wireless communications devices, for example, cellular handsets, including receiving a network control message (224), forcing an active packet session into a dormancy state in response to receiving the network control message (226), suspending a dormancy timer (230) after receiving the network control message (228), and starting the dormancy timer upon completion of an event, for example, a voice pre-emption, that precipitated suspension of the active packet session.

WO 2005/104600A1 relates to methods, systems and computer program products are provided through which a wireless terminal participating in a packet-switched communications session may temporarily suspend the session, for example, upon receipt of an incoming circuit-switched call. The wireless terminal may notify a server associated with the packet-switched session of receipt of the incoming circuit-switched call, and may also notify the server when the packet-switched session may be resumed. In embodiments of the present invention implemented in GSM networks, one or more of the notification messages may be transmitted to the server over the SMS data bearer.

GB 2381418A relates to a mobile communications terminal has two or more receiver circuits 130, 230 and is adapted to receive two or more SIMs (Subscriber Identity Modules) 102, 202 for simultaneously providing services or applications from different service providers or different subscriptions with the same service provider. The mobile terminal may also have more than one transmitter circuit. The terminal may share two receiver circuits between a greater number of subscriptions using an algorithm for assigning priorities to each subscription. The mobile terminal allows simultaneous use of call functions (voice or data), short message functions, registration functions (cell re-selection, PLMN selection, location updates) and supplementary service functions of different subscriptions.

### SUMMARY OF THE INVENTION

The technical problem to be addressed in embodiments of this invention is to provide a mobile terminal and service processing method thereof, a baseband processing chip, allowing a multi-card multi-standby mobile terminal based on the single RF single baseband scheme to process high real time services on other user cards during processing a PS domain service on one user card.

In order to address the above technique problems, a method for service processing in a mobile terminal is provided, comprising:
in response to the situation that a first user card in an on-network state is required to process a high real time service, identifying whether PS domain data being received/transmitted in a PS domain service currently processed on a second user card is the critical data for maintaining the QoS level of the PS domain service, wherein the high real time service has higher requirement to real-time than the PS domain service, and the first user card and the second user card belong to the multiple user-cards inserted in the same mobile terminal;
in response to the PS domain data being received/transmitted is non-critical data, suspending the processing of the PS domain service and processing the high real time service.

A baseband processing chip is provided in the embodiments of this invention, comprising:
a first service processing unit, for processing a PS domain service on a second user card among multiple user cards inserted in the same mobile terminal;
a first monitoring unit, for monitoring whether there is a first user card in an on-network state among the multiple user cards that is required to process a high real time service, wherein the high real time service has higher requirement to real-time than the PS domain service;
a first identifying unit, for responding to the situation that a first user card in an on-network state is required to process a high real time service, and identifying whether PS domain data being received/transmitted in the PS domain service is the critical data for maintaining the QoS level of the PS domain service according to the monitoring result of the first monitor unit;
a scheduling unit, for responding to the situation that the PS domain data being received/transmitted is non-critical data, instructing the first service processing unit to suspend the processing of the PS domain service and instructing a second service processing unit to process the high real time service according to the identifying result of the first identification unit;
a second service processing unit, for processing the high real time service on the first user card according to the instruction of the scheduling unit.

A mobile terminal is provided in an embodiment of this invention, comprising a RF chip, a baseband processing chip and multiple user card slots, wherein the baseband processing chip is used, in response to the situation that a first user card in an on-network state is required to process a high real time service, to identify whether PS domain data being received/transmitted in a PS domain service on a second user card is the critical data for maintaining the QoS level of the PS domain service, wherein the high real time service has higher requirement to real-time than the PS domain service, and the first user card and the second user card belong to multiple user cards inserted in the same mobile terminal; and in response to the situation that the PS domain data being received/transmitted is non-critical data, to suspend the processing of the PS domain service and process the high real time service.

Based on the mobile terminal and its service processing method and the baseband processing chip provided in above embodiments of this invention, when a first user card in an on-network state among multiple user cards inserted in the same mobile terminal is required to process a high real time service, it is identified whether PS domain data being received/ transmitted in a PS domain service currently processed on a second user card is critical data for maintaining the QoS Level of the PS domain service, if the PS domain data being received/ transmitted is non-critical data, the processing of the PS domain service is suspended and the high real time service is processed. During performing a PS domain service on a user card of a multi-card multi-standby mobile terminal based on the single RF single baseband scheme, high real time services on other user cards, such as CS domain services, can be processed in time. Because a high real time service has higher requirement to real-time than a PS domain service, through suspending the processing of a PS domain service and processing a high real time service preferentially when PS domain data being received/ transmitted in the PS domain service is not critical data, failures on high real time service due to delayed processing can be effectively avoided. As compared to the prior art, the success rate of high real time services on other user cards can be increased. In addition, because the PS domain data being received/transmitted in the PS domain service is not critical data, suspending the processing of the PS domain service will not cause degradation in quality of the PS domain service, such as, a break in the PS domain service or a significant decrease in data transmission rate.

The technical solutions of this invention will be further described below with reference to accompanying drawings and embodiments.

### BRIEF DESCRIPTION OF THE DRAWINGS

For a more explicit description of the technical solutions of embodiments of this invention, a brief introduction of accompanying drawings to be used in the description of these embodiments will be given below. Obviously, accompanying drawings described below are merely some embodiments of this invention. Other accompanying drawings can be derived by those skilled in the art from these ones without any creative efforts.
Fig.1 is a flowchart of a method for service processing in a mobile terminal according to an embodiment of this invention;
Fig. 2 is a flowchart of a method for service processing in a mobile terminal according to another embodiment of this invention;
Fig.3 is a flowchart of a method for service processing in a mobile terminal according to another further embodiment of this invention;
Fig.4 is a flowchart of a method for service processing in a mobile terminal according to another further embodiment of this invention;
Fig.5 is a flowchart of a method for service processing in a mobile terminal according to another further embodiment of this invention;
Fig.6 is a schematic structure diagram of a baseband processing chip according to an embodiment of this invention;
Fig.7 is a schematic structure diagram of a baseband processing chip according to another embodiment of this invention;
Fig. 8 is a schematic structure diagram of a mobile terminal according to an embodiment of this invention.

### DESCRIPTION OF THE EMBODIMENTS

A clear and complete description of technical solutions of the embodiments of this invention will be given with reference to the accompanying drawings of the embodiments of this invention. Obviously, the embodiments described herein are merely a part of the embodiments of this invention, but not all of them.

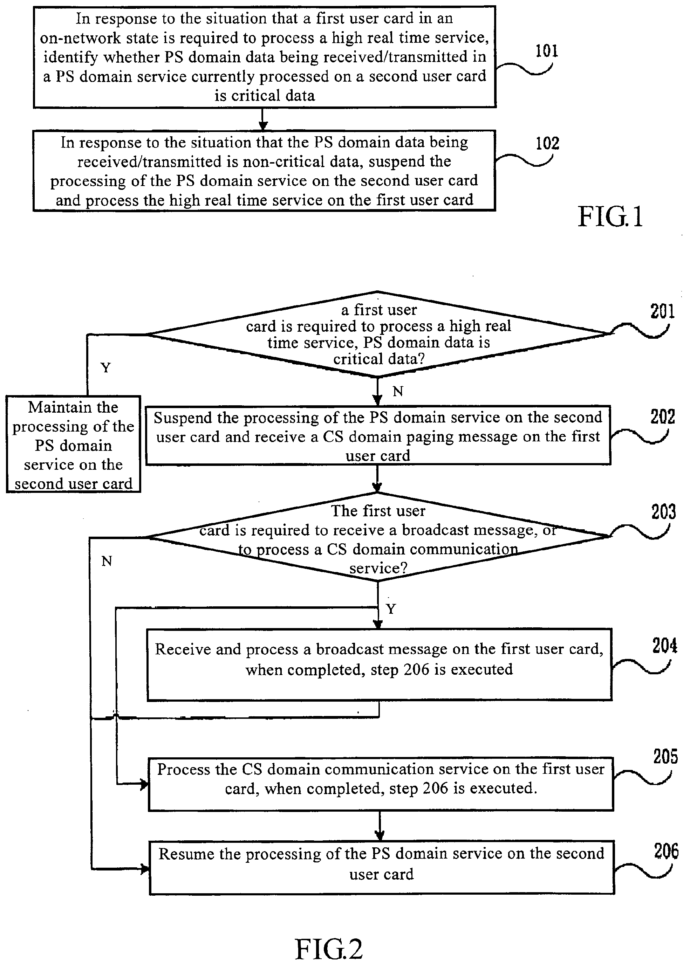

Fig.1 is a flowchart of a method for service processing in a mobile terminal according to an embodiment of this invention. The multi-card multi-standby mobile terminal in the embodiment of this invention may be a multi-card multi-standby mobile terminal based on the single RF single baseband scheme. As shown in Fig.1, the service processing method of this embodiment comprises the following steps:
101, in response to the situation that a first user card in an on-network state is required to process a high real time service, identifying whether PS domain data being received/transmitted in a PS domain service currently processed on a second user card is the critical data for maintaining the QoS level of the PS domain service.

Wherein, the first user card and the second user card belong to multiple user cards inserted in the same mobile terminal, and the mobile terminal having multiple user cards inserted is the multi-card multi-standby mobile terminal. In a particular embodiment of this invention, the multiple user cards may particularly comprise any one or more of a SIM card, a Removable User Identifier Module (R-UIM) card, a User Identifier Module (UIM) card, and a Universal Subscriber Identity Module (USIM) card, and other user cards. Wherein, the SIM card is applicable in a GSM network, the R-UIM card is applicable in a Wideband Code Division Multiple Access (WCDMA) network, the UIM card is applicable in a CDMA2000 network, and USIM card is applicable in a Time Division-Synchronization Code Division Multiple Access (TD-SCDMA) network. In practical applications, the multiple user cards inserted in a multi-card multi-standby mobile terminal may be of the same type, such as all of them are SIM cards, R-UIM cards, UIM cards or USIM cards, or not all the same or all different, such as two or more of a SIM card, an R-UIM card, a UIM card, a USIM card. Specifically, when the multi-card multi-standby mobile terminal is a GSM terminal, the first user card and the second user card may be the same user card.

A user card in an on-network state means that the user card has acquired synchronization information of a cell. For example, in a GSM network, it may mean the correct reception of synchronization information on a Synchronization Channel (SCH); in a TD-SCDMA network, it may mean that midamble code has been detected correctly.

In various embodiments of this invention, the high real time service may be any service having higher requirement to real-time than a PS domain service currently processed on the second user card, for example, a CS domain service in a GSM network, a Code Division Multiple Access (CDMA) network, such as a WCDMA network, a CDMA2000 network, a TD-SCDMA network or other networks, other PS domain services having higher requirement to real-time than the PS domain service currently processed on the second user card, an IP Multimedia Subsystem (IMS) service etc, including but not limited to, a calling service, such as an audio calling and video calling service, a short message service, and a multimedia service, etc.

The PS domain service herein may be a download or upload service over a mobile communication network, including PS domain data reception/transmission process, such as instant messaging, webpage browsing, multimedia message transmission and download, etc. The critical data is used to maintain the QoS level of the PS domain service, for example, the data for maintaining the PS domain service or maintaining the PS domain data transmission rate thereof, the PS domain service cannot be maintained or data transmission rate may have a significant decrease if the critical data is discarded. In a particular application, the critical data may be data specified in a communication protocol, or user-specified data, for example, the uplink polling data transmitted by a GSM terminal, the signaling involved in a PS domain service in a CDMA communication system, such as WCDMA, CDMA2000 or TD-SCDMA, and specific signaling specified in a communication protocol or involved in a PS domain service specified by a user.

102, in response to the situation that the PS domain data being received/transmitted is non-critical data, suspending the processing of the PS domain service on the second user card and processing the high real time service on the first user card.

In the method of service processing in a multi-card multi-standby mobile terminal of the above embodiment, when a first user card in on-network state among the multiple user cards inserted in the multi-card multi-standby mobile terminal is required to process a high real time service, it is identified whether PS domain data being received/transmitting in the PS domain service currently processed on the second user card is the critical data for maintaining the QoS level of the PS domain service, if the PS domain data being received/transmitting is non-critical data, the PS domain service is suspended, and the high real time service is processed. During performing a PS domain service on a user card of a multi-card multi-standby mobile terminal which is based on the single RF single baseband scheme, a high real time service on other user card, such as a CS domain service, can be processed in time. Because a high real time service has higher requirement to real-time than a PS domain service, through suspending the processing of a PS domain service and processing a high real time service prior to the PS domain service when PS domain data being received/transmitted in the PS domain service is not critical data, high real time service failures due to delayed processing can be effectively avoided, and the success rate of the high real time service on other user cards can be increased. In addition, because the PS domain data being received/transmitted in the PS domain service is not critical data, suspending the processing of the PS domain service will not lead to degradation in quality of the PS domain service, such as, a break in the PS domain service or a significant decrease in data transmission rate thereof.

When the second user card and the first user card are the same user card, the embodiment of this invention can prevent not only a conflict between a PS domain service and a high real time service on different user cards, but also a conflict between a PS domain service and a high real time service on the same user card. During the user card processing a PS domain service, a high real time service can be processed, such as receiving a paging message, a broadcast message, performing location area update etc, without causing degradation in QoS of the PS domain service.

Furthermore, as a particular embodiment of this invention, within the embodiment shown in Fig.1, after the high real time service on the first user card is processed, the processing of the PS domain service on the second user card can be resumed to avoid a break in the PS domain service or data loss, and thus achieving the maintaining of the PS domain service.

Further, as another particular embodiment of this invention, the reception/transmission of critical data is prior to the processing of the high real time service. In the embodiment shown in Fig.1, if the PS domain data being received/transmitted on the second user card is the critical data, the processing of the PS domain service is continued to receive/transmit the critical data therein, during which no high real time service is processed.

In various above embodiments of this invention, when the high real time service is a CS domain service, it includes, but not limited to, a CS domain paging message, a broadcast message, location area update, etc. Correspondingly, the first user card is required to process a CS domain service, particularly the first user card may be required to receive a CS domain service message, such as a CS domain paging message, a broadcast message, or is required to perform a particular CS domain service, for example, to perform location area update and other services. Processing a CS domain service on the first user card may correspondingly comprise: receiving and processing a CS domain paging message on the first user card, receiving and processing a broadcast message on the first user card, performing location area update for the first user card, and etc. According to a particular embodiment of this invention, the criterion that the first user card is required to receive a CS domain paging message may comprise: the time for a paging message reception by the first user card specified by a paging period is reached, or a paging indictor indicates that it is required to receive a paging message. According to this embodiment, it is deemed that the first user card is required to receive and process a CS domain paging message when the time for a paging message reception by the first user card specified by a paging period is reached, or when a paging indicator indicates that it is required to receive a paging message.

For example, in GSM, a user card is required to receive a paging message on a paging indicator channel (PCH) at the time for paging message reception specified by a paging period, when the first user card in the embodiment of this invention is a SIM card, a CS domain paging message is required to be received and processed when the current time reaches the time for paging message reception specified by the paging period.

Also, in WCDMA, CDMA2000 and TD-SCDMA communication systems, a user card is required to receive a paging indicator on a paging indication channel (PICH) at the time for paging indicator reception specified by a paging indicator period, and identify whether the value of the paging indicator is 1, wherein value 1 of the paging indicator represents that a paging message is required to be received on the PCH; otherwise value 0 represents that no paging message is required to be received. Therefore, when the first user card in the embodiment of this invention is an R-UIM card, a UIM card, a USIM card, a paging indicator can be received on the PICH for the first user card at the time for paging indicator reception, and if value of the paging indicator is identified, it is informed that a paging message is required to be received by the first user card.

Fig.2 is a flowchart of a method for service processing in a mobile terminal according to another embodiment of this invention. In this embodiment, a description will be given, in which the high real time service is a CS domain paging message in a CS domain service as an example, which is applicable to other high real time services. As shown in Fig.2, the service processing method of this embodiment comprises the following steps:
201, in response to the situation that a first user card in an on-network state is required to process a high real time service, identifying whether PS domain data being received/transmitted in a PS domain service currently processed on a second user card is the critical data for maintaining the QoS level of the PS domain service. If the PS domain data being received/transmitted is non-critical data, step 202 is executed; otherwise, if the PS domain data being received/transmitted is critical data, the processing of the PS domain service on the second user card is maintained.
202, suspend the processing of the PS domain service on the second user card and receive a CS domain paging message on the first user card.
203, according to the information within the CS domain paging message, identifying whether the first user card is required to receive a broadcast message, or to process a CS domain service. If the first user card is required to receive a broadcast message, step 204 is executed. If the first user card is required to process a CS domain communication service, step 205 is executed. Otherwise, if the first user card is not required to receive a broadcast message or to process a CS domain communication service, step 206 is executed.
204, receiving and processing a broadcast message on the first user card. Step 206 is executed after the receiving and processing of broadcast message on the first user card is completed.
   Particularly, as still another particular embodiment of this invention, the operation of step 204 may comprise: receiving a broadcast message on the first user card, and identifying whether the location area in which the multi-card multi-standby mobile terminal is located has changed according to the information within the broadcast message; if the location area in which the multi-card multi-standby mobile terminal is located has changed, performing location area update for the first user card, and step 206 is executed after the location area update is completed.
   During the processing of the PS domain service on the second user card, a CS domain paging message, a broadcast message on the first user card can be received, and location area update can be performed for the first user card accordingly, maintaining synchronization state between the first user card and the mobile communication network, so that an off-network can be prevented for the first user card, and the success rate of a subsequent communication service can be effectively guaranteed.
205, processing the CS domain service on the first user card, for example, a call request service, a short message service, a multimedia message service, etc. Step 206 is executed after the CS domain communication service is processed.
   During the processing of the PS domain service on the second user card, a broadcast message can be received and a CS domain service can be processed, to support processing of the CS domain communication service on the first user card during the processing of the PS domain service on the first user card. On the premise that the QoS level of the PS domain service on the second user card can be effectively guaranteed, the normal processing of the CS domain service can be guaranteed also, so that the QoS and the success rate of the CS domain service can be improved, and communication service quality and customer satisfaction can be improved.
206, resuming the processing of the PS domain service on the second user card.

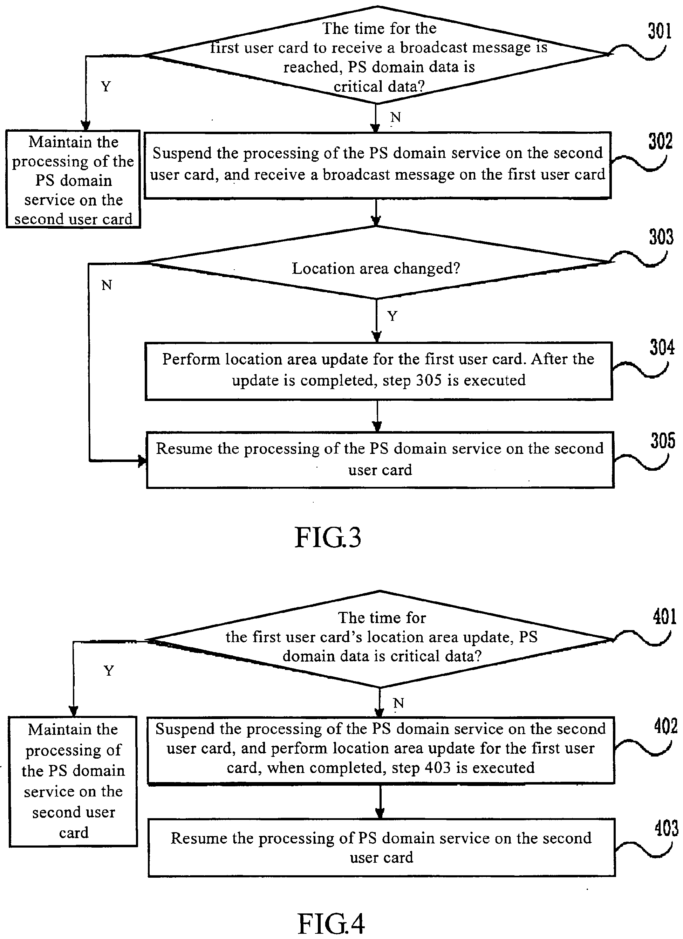

Fig.3 is a flowchart of a method for service processing in a mobile terminal according to still another embodiment of this invention. In this embodiment, a description will be given, in which the high real time service is a broadcast message in a CS domain service as an example, which is applicable to other high real time services. As shown in Fig.3, the service processing method of this embodiment comprises the following steps:
301, in response to the situation that a current time reaches the time for a broadcast message reception on the first user card according to a time interval specified in a communication protocol, identifying whether PS domain data being received/transmitted in a PS domain service currently processed on a second user card is the critical data for maintaining the QoS level of the PS domain service. If the PS domain data being received/transmitted is non-critical data, step 302 is executed; otherwise, if the PS domain data being received/transmitted is critical data, the processing of the PS domain service on the second user card is maintained.
302, suspending the processing of the PS domain service on the second user card, and receiving a broadcast message on the first user card.
303, according to the information within the broadcast message on the first user card, identifying whether the location area in which the multi-card multi-standby mobile terminal is located has changed, if the location area in which the multi-card multi-standby mobile terminal is located has changed, step 304 is executed; otherwise, if the location area in which the multi-card multi-standby mobile terminal is located has not changed, step 305 is executed.
304, performing location area update for the first user card. After the location area update of the first user card is completed, step 305 is executed.
   During the processing of the PS domain service on the second user card, a broadcast message on the first user card can be received, and location area update can be performed for the first user card accordingly, maintaining synchronization state between the first user card and the mobile communication network, so that an off-network can be prevented for the first user card, and the success rate of the subsequent communication service can be effectively guaranteed.
305, resuming the processing of the PS domain service on the second user card.

Fig.4 is a flowchart of a method for service processing in a mobile terminal according to still another embodiment of this invention. In this embodiment, a description will be given, in which the high real time service is the location area update in a CS domain service as an example, which is applicable to other high real time services. As shown in Fig.4, the service processing method of this embodiment comprises the following steps:
401, in response to the situation that a current time reaches the time for location area update of a first user card according to a time interval specified by a communication protocol, identifying whether PS domain data being received/ transmitted in a PS domain service currently processed is the critical data for maintaining the QoS level of the PS domain service. If the PS domain data being received/transmitted is non-critical data, step 402 is executed; otherwise, if the PS domain data being received/transmitted is critical data, the processing of the PS domain service on the second user card is maintained.
402, suspending the processing of the PS domain service on the second user card, and perform location area update for the first user card. After the location area update for the first user card is completed, step 403 is executed.
   During the processing of the PS domain service on the second user card, location area update can be performed for the first user card, maintaining synchronization state between the first user card and the mobile communication network, so that an off-network can be prevented for the first user card, and the success rate of a subsequent communication service can be effectively guaranteed.
403, resuming the processing of the PS domain service on the second user card.

In addition, according to another embodiment of this invention, it is further identified whether there is a third user card in an off-network state among the multiple user cards, in response to the situation that there is a third user card in an off-network state among the multiple user cards, power scan and network searching can be performed for the third user card to get the third user card into an on-network state and synchronized with the mobile communication network. During the processing of the PS domain service, for example, within an idle slot or idle frame during the processing of the PS domain service, power scan and network searching can be performed for the third user card to get the third user card into an on-network state and synchronized with the mobile communication network, so as to avoid a long term off-network state of the third user card, and to effectively improve the success rate of subsequent communication service operations.

In a particular application, the third user card and the first user card may be the same user card, or two different user cards. No matter whether the third user card and the first user card are the same user card or not, the flows of various embodiments of this invention are initiated depending on trigger conditions, and there is none temporally restricted relationships between the various embodiments. Wherein, the trigger conditions may be, for example, the first user card in an on-network state is required to be process a high real time service, the current time reaches the time for a broadcast message reception or the time for location area update according to a time interval specified in a communication protocol, whether there is a third user card in an off-network state among the multiple user cards.

Wherein, power scan is an operation which is executed to shorten the time required for network searching by a mobile terminal, wherein the mobile terminal receives signals at various frequency points, and evaluates signal strength values at the various frequency points, if a present frequency point has a higher signal strength value, network searching process will be performed for that frequency point; otherwise, if the present frequency point has a lower signal strength value, no network searching process will be performed for that frequency point. Network searching is a process in which the mobile terminal is synchronized with the mobile communication network and receives some necessary information. To communication with the mobile communication network, for example, to originate a call request or to perform a PS domain service, the mobile terminal must be synchronized with the mobile communication network at first, including time synchronization, frequency synchronization etc. , and some necessary information of the mobile communication network is acquired, such as receiving some necessary broadcast information from the mobile communication network.

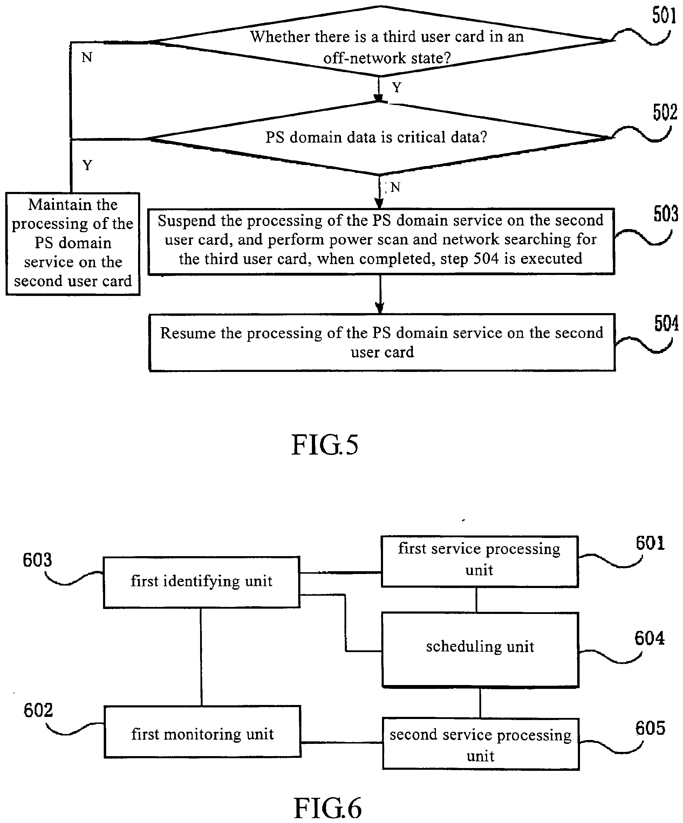

Fig.5 is a flowchart of a method for service processing in a mobile terminal according to still another embodiment of this invention. This embodiment shows an exemplary flow of performing power scan and network searching for a third user card in an off-network state. As shown in Fig.5, the service processing method of this embodiment comprises the following steps.
501, identifying whether there is a third user card in an off-network state among the multiple user cards. If there is a third user card in an off-network state among the multiple user cards, step 502 is executed; otherwise, the processing of the PS domain service on the second user card is maintained.
502, identify whether PS domain data being received/ transmitted in the PS domain service currently processed on the second user card is the critical data for maintaining the QoS level of the PS domain service. If the PS domain data being received/transmitted is non-critical data, step 503 is executed; otherwise, if the PS domain data being received/transmitted is critical data, the processing of the PS domain service on the second user card is maintained.
503, suspending the processing of the PS domain service on the second user card, and performing power scan and network searching for the third user card. After power scan and network searching for the third user card is completed, step 504 is executed.
504, resuming the processing of the PS domain service on the second user card.

Further, as another particular embodiment of this invention, critical data reception is prior to power scan and network searching performed for the third user card. In the embodiment shown in Fig.5, if the PS domain data being received/ transmitted on the second user card is the critical data, the PS domain service is continued to receive the critical data thereof, during which no power scan and network searching are performed for the third user card.

In addition, the multiple user cards in various above embodiments of this invention may be two or more user cards. When the multiple user cards are two or more user cards, the multi-card multi-standby mobile terminals of the above various embodiments are particularly dual-cards dual-standby mobile terminal. When the multiple user cards are more than three user cards, the second user card/the third user card of the various embodiments above of this invention may be one user card or multiple user cards. When the second user card/the third user card is multiple user cards, the high real time services on the multiple second user cards can be processed in sequence, and the power scan and network searching on the multiple third user cards can be performed in sequence, according to a predetermined policy, such as according to a temporal sequence, a user card sequence.

Fig.6 is a schematic structure diagram of a baseband processing chip according to an embodiment of this invention. The baseband processing chip of this embodiment can be used to realize the flow of the service processing method in a multi-card multi-standby mobile terminal according to the various embodiments above of this invention. As shown in Fig.6, it comprises a first service processing unit 601, a first monitoring unit 602, a first identifying unit 603, a scheduling unit 604 and a second service processing unit 605.

Wherein, the first service processing unit 601 is used to process a PS domain service on a second user card among multiple user cards inserted in the same mobile terminal, wherein the mobile terminal is a multi-card multi-standby mobile terminal.

The first monitoring unit 602 is used to monitor whether there is a first user card in an on-network state among the multiple user cards that is required to process a high real time service, wherein the high real time service has higher requirement to real-time than the PS domain service.

The high real time service may be any service having higher requirement to real-time than a PS domain service currently processed on the second user card, for example, a CS domain service in a GSM network, a CDMA network, such as a WCDMA network, a CDMA2000 network, a TD-SCDMA network or other networks, other PS domain services having higher requirement to real-time than the PS domain service currently processed on the second user card, an IMS service etc, including but not limited to, a calling service, such as an audio calling and video calling service, a short message service, and a multimedia service, etc.

The first identifying unit 603 is used to according to the monitoring result of the first monitoring unit 602, in response to the situation that a first user card in an on-network state is required to process a high real time service, identify whether PS domain data being received/transmitted in the PS domain service is critical data for maintaining the QoS level of the PS domain service.

Wherein, the PS domain service may be a download or upload service over a mobile communication network, including PS domain data reception/transmission process, such as instant messaging, webpage browsing, multimedia message transmission and download, etc. The critical data is used to maintain the QoS level of the PS domain service, for example, the data for maintaining the PS domain service or maintaining the PS domain data transmission rate thereof, the PS domain service cannot be maintained or the data transmission rate may have a significant decrease if the critical data is discarded. In a particular application, the critical data may be data specified in a communication protocol, or user-specified data, such as uplink polling data transmitted by a GSM terminal, signaling involved in a PS domain service in a CDMA communication system, such as WCDMA, CDMA2000 or TD-SCDMA, and specific signaling specified in a communication protocol or involved in a PS domain service specified by a user.

The scheduling unit 604 is used according to the result of the first identifying unit 603, in response to the situation that the PS domain data being received/transmitted is non-critical data, to instruct the first service processing unit 601 to suspend the processing of the PS domain service and instruct the second service processing unit 605 to process the high real time service.

The second service processing unit 605 is used to process the high real time service on the first user card according to the instruction of the scheduling unit 604.

In the baseband processing chip of the above embodiment, when a first user card in an on-network state among the multiple user cards inserted in the multi-card multi-standby mobile terminal is required to process a high real time service, it is identified whether PS domain data being received/transmitting in the PS domain service currently processed on the second user card is the critical data for maintaining the QoS level of the PS domain service, if the PS domain data being received/ transmitting is non-critical data, the processing of the PS domain service is suspended, and the high real time service is processed. During performing a PS domain service on a user card of a multi-card multi-standby mobile terminal which is based on the single RF single baseband scheme, a high real time service on other user cards, such as a CS domain service, can be processed in time. Because a high real time service has higher requirement to real-time than a PS domain service, through suspending the processing of a PS domain service and processing a high real time service prior to the PS domain service when PS domain data being received/transmitted in the PS domain service is not critical data, high real time service failures due to delayed processing can be effectively avoided, and the success rate of the high real time service on the other user card can be increased. In addition, because the PS domain data being received/ transmitted in the PS domain service is not critical data, suspending the processing of the PS domain service will not cause degradation in quality of the PS domain service, such as a break in the PS domain service or a significant decrease in data transmission rate thereof.

Corresponding to the above embodiment of a service processing method of this invention, according to another particular embodiment of this invention, the scheduling unit 604 is further used, after the high real time service on the first user card is completed by the second service processing unit 605, to instruct the first service processing unit 601 to resume the processing of the PS domain service on the second user card, avoiding a break in the PS domain service or data loss, and thus achieving the maintaining of the PS domain service.

Further, according to still another particular embodiment of this invention, the reception of critical data by the first service processing unit 601 is prior to the processing of the high real time service by the second service processing unit 605.

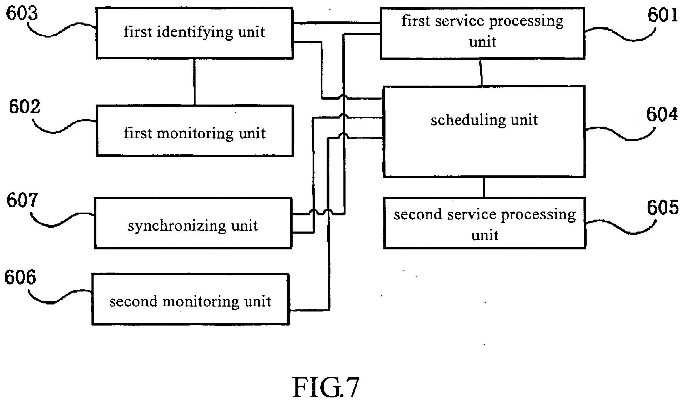

Fig.7 is a schematic structure diagram of a baseband processing chip according to another embodiment of this invention. The baseband processing chip in this embodiment can implement the flow of the embodiment shown in Fig.5 of this invention. As shown in Fig. 7, as compared to the embodiment shown in Fig. 6, the baseband processing chip of this embodiment further comprises a second monitoring unit 606 and a synchronizing unit 607. Wherein the second monitoring unit 606 is used to monitor whether there is a third user card in an off-network state among the multiple user cards. Correspondingly, the scheduling unit 604 is used according to the monitoring result of the second monitoring unit 606, in response to the situation that there is a third user card in an off-network state among the multiple user cards, to instruct the synchronizing unit 607 to perform power scan and network searching for the third user card. The synchronizing unit 607 is used to perform power scan and network searching for the third user card according to the instruction of the scheduling unit 604. Power scan and network searching for the third user card in an off-network state can be performed during the processing of the PS domain service to get the third user card into an on-network state and synchronized with the mobile communication network, so as to avoid a long term off-network state of the third user card and to effectively improve the success rate of subsequent communication service operations.

Particularly, referring to Fig.7 again as still another particular embodiment of this invention, in response to the situation that there is a third user card in an off-network state among the multiple user cards, the scheduling unit 604 instructs the synchronizing unit 607 to perform power scan and network searching for the third user card in an idle slot or idle frame during the processing of the PS domain service by the first service processing unit 601; or in response to the situation that the PS domain data being received/transmitted is non-critical data, instructing the first service processing unit 601 to suspend the processing of the PS domain service, and instructing the synchronizing unit 607 to perform power scan and network searching for the third user card.

Further, in various embodiments shown in Fig.7, the critical data reception by the first service processing unit 601 is prior to the power scan and network searching for the third user card by the synchronizing unit 607. This is to say, if the PS domain data being received/transmitted on the second user card is critical data, the first service processing unit 601 continues the processing of the PS domain service to receive/transmit the critical data thereof, during which the scheduling unit 604 does not instruct the synchronizing unit 607 to perform power scan and network searching for the third user card.

Corresponding to the various above embodiments of the service processing method of this invention, the high real time service processed by the second service processing unit 605 is a CS domain service, including but not limited to a CS domain paging message, a broadcast message, location area update etc. According to a particular embodiment of this invention, corresponding to the service processing method embodiment shown in Fig.2, the criterion that the first user card is required to receive a CS domain paging message may comprise: the first user card reaches the time for a paging message reception specified by a paging period, or a paging indictor indicates that it is required to receive a paging message. According to this embodiment, the first monitoring unit 602 may deem that the first user card is required to receive and process a CS domain paging message when the first user card reaches the time for a paging message reception specified by a paging period, or when a paging indicator indicates that it is required to receive a paging message. Correspondingly, the second service processing unit 605 particularly receives and processes a CS domain paging message on the first user card according to the instruction of the scheduling unit 604.

Further, that the second service processing unit 605 receives and processes a CS domain paging message may particularly comprise receiving a CS domain paging message on the first user card; identifying whether the first user card is required to receive a broadcast message or to process a CS domain service according to the information within the CS domain paging message; in response to the situation that the first user card is required to receive a broadcast message, receiving and processing a broadcast message on the first user card; and in response to the situation that the first user card is required to process a CS domain service, processing the CS domain service on the first user card.

Particularly, that the second service processing unit 605 receives and processes a broadcast message on the first user card may particularly comprise receiving a broadcast message on the first user card, identifying whether the location area in which the multi-card multi-standby mobile terminal is located has changed according to the information within the broadcast message; and in response to the situation that the location area in which the multi-card multi-standby mobile terminal is located has changed, performing location area update for the first user card.

During the processing of the PS domain service on the second user card, a CS domain paging message, a broadcast message on the first user card can be received, and location area update can be performed for the first user card accordingly, maintaining synchronization state between the first user card and the mobile communication network, so that the off-network situation can be prevented for the first user card, and the success rate of a subsequent communication service can be effectively guaranteed.

According to another particular embodiment of this invention, corresponding to the service processing method embodiments shown in Figs.3 and 4, when the CS domain service is a broadcast message or a location area update, the first monitoring unit 602 may deem that a broadcast message is required to be received or a location area update is required to be preformed when the time for a broadcast message reception or location area update according to an interval specified in a communication protocol is reached. Correspondingly, the second service processing unit 605 particularly receives and processes a broadcast message on the first user card or performs location area update for the first user card according to the instruction of the scheduling unit 604.

According to the baseband processing chip in various above embodiments of this invention, the multiple user cards inserted in the multi-card multi-standby mobile terminal may comprise any one or more of a SIM card, an R-UIM card, a UIM card and a USIM card. In a particular embodiment, the third user card and the first user card may be the same user card, or two different user cards. When the multi-card multi-standby mobile terminal is a GSM terminal, the first user card and the second user card may be the same user card.

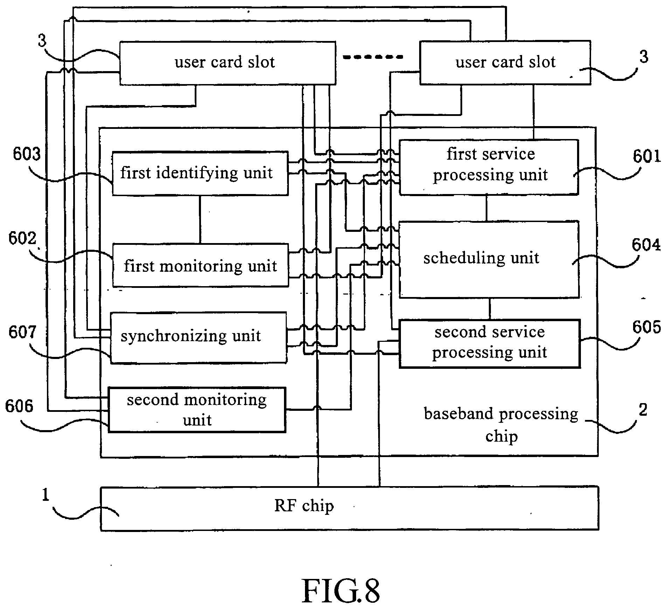

Fig. 8 is a schematic structure diagram of a mobile terminal according to an embodiment of this invention. The mobile terminal provided in this embodiment may employ a single RF single baseband scheme to achieve functions of the multi-card multi-standby mobile terminal in various above embodiments of this invention. As shown in Fig. 8, it comprises a RF chip 1, a baseband processing chip 2 and multiple user card slots 3.

Wherein, the RF chip 1 is used to realize the reception and transmission of data or message between the baseband processing chip 2 and a communication network, for example, forwarding PS domain data between a General Packet Radio Service (GPRS) network and the first service processing unit 601 of the baseband processing chip 2, forwarding a CS domain service message, CS domain or PS domain data between a GMS network and the second service processing unit 605 of the baseband processing chip 2. The multiple user card slots 3 are used to insert multiple user cards.

The baseband processing chip 2 is used in response to the situation that a first user card in an on-network state is required to process a high real time service, to identify whether PS domain data being received/transmitted in a PS domain service currently processed on the second user card is the critical data for maintaining the QoS level of the PS domain service, and in response to the situation that the PS domain data being received/transmitted is non-critical data, to suspend the processing of the PS domain service and process the high real time service. Wherein, the high real time service has higher requirement to real-time than the PS domain service, and the first user card and the second user card belong to multiple user cards inserted in the multiple user card slots 3.

The baseband processing chip 2 may particularly comprise the baseband processing chip provided in any of the embodiments shown in Fig.6 to Fig. 7 of this invention. As an example, Fig.8 merely shows a structure in which the embodiment shown in Fig.7 is employed for the baseband processing chip 2. As for a baseband processing chip 2 employing a particular structure of a baseband processing chip in other embodiment of this invention, the connections to the RF chip 1 and the multiple user card slots 3 are similar to that shown in Fig. 8, which will not be described in detail.

In the multi-card multi-standby mobile terminal of the above embodiments, when the first user card in an on-network state among the multiple user cards is required to process a high real time service, the baseband processing chip 2 may identify whether PS domain data being received/transmitted in a PS domain service currently processed on a second user card is the critical data for maintaining the QoS Level of the PS domain service, if the PS domain data being received/transmitted is non-critical data, the processing of the PS domain service is suspended and the high real time service is processed. During the processing of a PS domain service on a user card of a multi-card multi-standby mobile terminal based on the single RF single baseband scheme, high real time services on other user cards, such as CS domain services, can be processed in time. Because a high real time service has higher requirement to real-time than a PS domain service, through suspending the processing of a PS domain service to process a high real time service first when PS domain data being received/ transmitted in the PS domain service is not critical data, high real time service failures due to delayed processing can be effectively avoided, and the success rate of high real time services on other user cards can be increased; in addition, because the PS domain data being received/transmitted in the PS domain service is not critical data, suspending the processing of the PS domain service will not cause degradation in quality of the PS domain service, such as, a break in the PS domain service or a significant decrease in data transmission rate.

Those skilled in the art may understand that embodiments of this invention may not necessarily be implemented by or limited to the component units of the multi-card multi-standby mobile terminal and the baseband processing chip in various above embodiments of this invention, for example, the multi-card multi-standby mobile terminal may be further provided with a display, a keyboard, an antenna or other peripheral devices according to actual requirements. In addition, the component units of the baseband processing chip may be further distributed into other component units of the multi-card multi-standby mobile terminal according to actual requirements. Among the component units of the baseband processing chip, several component units can be combined into a single unit, or a component unit can be divided into several subunits to achieve this invention. In addition, the connection relationships between various component units of the baseband processing chip, and the connection relationships between the component units of the baseband processing chip and other component units of the terminal merely represent exemplary information flow directions, but not limited to physical connection relationships based on the embodiments of the invention, and are not necessarily required or limitations for the implementation of the embodiments.

Various embodiments of this invention have been described in a progressive manner, wherein each embodiment has focused on differences from other embodiments. A mutual reference can be made to various embodiments for the same or similar portions thereof. With respect to the baseband processing chip and the multi-card multi-standby mobile terminal, due to the correspondence to the method embodiments thereof, only a simple description is given, refer to those method embodiments for related portions.

Those skilled in the art may appreciate: some or all steps of the above method embodiments can be realized by program instructions related hardware, the program aforementioned can be stored in a computer readable storage medium, when executed the program may execute steps of the above method embodiments; the storage medium aforementioned includes ROM, RAM, magnetic disc or optical disc and other mediums capable of storing program code.

Embodiments of this invention can prevent conflicts between a PS domain service and a high real time service on the same user card or different user cards among multiple user cards that are inserted in a multi-card multi-standby mobile terminal, and address the problem that, in a multi-card multi-standby mobile terminal based on the single RF single baseband scheme, during performing a PS domain service on a user card, it is unable to process a high real time service on that user card or other user card without leading to the QoS degradation of the PS domain service; in addition, the switching between PS domain service and high real time service can be realized without manual intervention, which does not result in the loss of data being received/transmitted in the PS domain service, so that customer satisfactory can be improved.

The descriptions of the present invention have been presented for the purposes of description and illustration, but are not intended to be exhaustive or limited to the embodiments disclosed. Many modifications and variations will be apparent for those skilled in this art. The embodiment was chosen and described in order to best explain the principles of the invention and the practical application, and to enable those skilled in the art to understand the invention for various embodiments with various modifications which are suited to the particular use contemplated.

In one example, the PS domain service is resumed after the high real time service is processed.

In one example, the reception/transmission of the critical data is prior to the processing of the high real time service.

In one example, the critical data is the data specified by a communication protocol or user specified data.

In one example, the first user card and the third user card are the same user card; or
the mobile terminal is a Global System for Mobile Communication (GSM) terminal, and the first user card and the second user card are the same user card.

In one example, the multiple user cards comprise any one or more of a Subscriber Identity Module (SIM) card, a Removable User Identifier Module (R-UIM) card, a User Identifier Module (UIM) card, and a Universal Subscriber Identity Module (USIM) card.

In one example, the high real time service comprises a Circuit Switched (CS) domain service.

In one example, the scheduling unit is further used for instructing the first service processing unit to resume the processing of the PS domain service after the second service processing unit has processed the high real time service.

In one example, the reception/transmission of the critical data by the first service processing unit is prior to the processing of the high real time service by the second service processing unit.

In one example, the reception/transmission of the critical data by the first service processing unit is prior to the power scan and network searching performed by the synchronizing unit for the third user card.

## Claims

1. A method for service processing in a mobile terminal, the method comprising:
in response to the situation that a first Subscriber Identity Module, SIM, in an on-network state is required to process a high real time service, identifying whether Packet Switched, PS, domain data being received/transmitted in a PS domain service currently processed on a second SIM is the critical data for maintaining the QoS level of the PS domain service (101), wherein the on-network state is a state in which the mobile terminal acquired synchronization information of a cell, and wherein the high real time service has higher requirement to real-time processing than the PS domain service, and the first SIM and the second SIM belong to multiple SIMs inserted in the same mobile terminal;
in response to the situation that the PS domain data being received/transmitted is non-critical data, suspending the processing of the PS domain service and processing the high real time service(102).

2. The method according to claim 1, further comprising:
in response to the situation that there is a third SIM in an off-network state among the multiple SIMs, performing power scan and network searching for the third SIM, wherein the off-network state is a state in which the mobile terminal lost synchronization with a network, and wherein the power scan is an operation which is executed to shorten the time required for network searching by the mobile terminal.

3. The method according to claim 2, further comprising performing power scan and network searching for the third SIM comprises:
performing power scan and network searching for the third SIM in an idle slot or an idle frame during the processing of the PS domain service; or
in response to the situation that the PS domain data being received/transmitted is non-critical data, suspending the processing of the PS domain service and performing power scan and network searching for the third SIM (503).

4. The method according to claim 3, further comprising the reception/transmission of the critical data prior to the power scan and network searching for the third SIM.

5. The method according to any of claims 1 to 4, in which the high real time service comprises a Circuit Switched, CS, domain service, the CS domain service comprises a CS domain paging message;
a CS domain service required to process comprises the time for a paging message reception specified by a paging period is reached, or an paging indicator indicates that it is required to receive a paging message;
processing the CS domain service comprises receiving and processing the CS domain paging message.

6. The method according to claim 5, in which receiving and processing the CS domain paging message comprises:
receiving the CS domain paging message on the first SIM;
identifying whether the first SIM is required to receive broadcast message or to process CS domain communication service according to the information within the CS domain paging message (203);
in response to the situation that the first SIM is required to receive a broadcast message, receiving and processing the broadcast message on the first SIM (204);
in response to the situation that the first SIM is required to process a CS domain communication service, processing the CS domain communication service on the first SIM (205).

7. The method according to claim 6, in which receiving and processing the broadcast message on the first SIM comprises:
receiving the broadcast message on the first SIM, and identifying whether the location area in which the mobile terminal is located has changed according to the information within the broadcast message (303);
in response to the situation that the location area in which the mobile terminal is located has changed, performing location area update for the first SIM (304).

8. The method according to any of claims 1 to 4, in which the high real time service comprises a Circuit Switched, CS, domain service, the CS domain service comprises: a broadcast message or a location area update;
the CS domain service required to process comprises: according to a time interval specified in a communication protocol, the time for a broadcast message reception, or the time for location area update is reached;
processing the CS domain service comprises receiving and processing the broadcast message on the first SIM, or performing location area update for the first SIM.

9. The method according to claim 8, in which receiving and processing the broadcast message on the first SIM comprises:
receiving the broadcast message on the first SIM, and identifying whether the location area in which the mobile terminal is located has changed according to the information within the broadcast message (303);
in response to the situation that the location area in which the mobile terminal is located has changed, performing location area update for the first SIM (304).

10. A baseband processing chip, comprising:
a first service processing unit (601), for processing a Packet Switched, PS, domain service on a second Subscriber Identity Module, SIM, among multiple SIMs inserted in the same mobile terminal;
a first monitoring unit (602), for monitoring whether there is a first SIM in an on-network state among the multiple SIMs that is required to process a high real time service, wherein the on-network state is a state in which the mobile terminal acquired synchronization information of a cell, and wherein the high real time service has higher requirement to real-time processing than the PS domain service;
a first identifying unit (603), for according to the monitoring result of the first monitoring unit, in response to the situation that the first SIM in an on-network state is required to process a high real time service, identifying whether PS domain data being received/transmitted in the PS domain service is the critical data for maintaining the QoS level of the PS domain service;
a scheduling unit (604), for according to the identifying result of the first identifying unit, in response to the situation that the PS domain data being received/transmitted is non-critical data, instructing the first service processing unit (601) to suspend the processing of the PS domain service and instructing a second service processing unit (605) to process the high real time service;
a second service processing unit (605), for processing the high real time service on the first SIM according to the instruction of the scheduling unit (604).

11. The baseband processing chip according to claim 10, further comprising:
a second monitoring unit (606), for monitoring whether there is a third SIM in an off-network state among the multiple SIMs, wherein the off-network state is a state in which the mobile terminal lost synchronization with a network, and wherein the power scan is an operation which is executed to shorten the time required for network searching by the mobile terminal;
the scheduling unit (604), further for according to the monitoring result of the second monitoring unit, in response to the situation that there is a third SIM in an off-network state among the multiple SIMs, instructing the synchronizing unit (607) to perform power scan and network searching for the third SIM;
a synchronizing unit (607), for performing power scan and network searching for the third SIM according to the instruction of the scheduling unit.

12. The baseband processing chip according to claim 11, in which the scheduling unit (604) is particularly used to, in response to the situation that there is a third SIM in an off-network state among the multiple SIMs, instruct the synchronizing unit (607) to perform power scan and network searching for the third SIM in an idle slot or an idle frame during the processing of the PS domain service by the first service processing unit (601); or
in response to the situation that the PS domain data being received/transmitted is non-critical data, instruct the first service processing unit (601) to suspend the processing of the PS domain service and perform power scan and network searching for the third SIM.

13. The baseband processing chip according to any of claims 10 to 12, in which the high real time service comprises a CS domain service, the CS domain service comprises a CS domain paging message;
the first SIM is required to process the CS domain paging message when the time for a paging message reception specified by a paging period is reached, or when an paging indicator indicates that it is required to receive a paging message;
the second service processing unit (605) is particularly used to receive and process the CS domain paging message on the first SIM according to the instruction of the scheduling unit.

14. The baseband processing chip according to claim 13, in which when receiving and processing the CS domain paging message, the second service processing unit (605) is particularly used to receive the CS domain paging message on the first SIM; identifying whether the first SIM is required to receive a broadcast message or to process a CS domain communication service according to the information within the CS domain paging message; in response to the situation that the first SIM is required to receive a broadcast message, receiving and processing the broadcast message on the first SIM; and in response to the situation that the first SIM is required to process a CS domain communication service, processing the CS domain communication service on the first SIM.

15. The baseband processing chip according to claim 14, in which, when receiving and processing the broadcast message on the first SIM, the second service processing unit (605) is particularly used to receive the broadcast message on the first SIM, and to identify whether the location area in which the mobile terminal is located in has changed according to the information within the broadcast message; and in response to the situation that the location area in which the mobile terminal is located has changed, performing location area update for the first SIM.

16. The baseband processing chip according to any of claims 10 to 12, in which the high real time service comprises a CS domain service, the CS domain service comprises a broadcast message or a location area update;
the first SIM is required to receive a broadcast message or to perform location area update when according to an time interval specified in a communication protocol, the time for a broadcast message reception, or the time for location area update is achieved;
according to the instruction of the scheduling unit (604), the second service processing unit (605) is particularly used to receive and process the broadcast message on the first SIM, or to perform location area update for the first SIM.

17. A mobile terminal, comprising a RF chip, a baseband processing chip, and multiple Subscriber Identify Module SIM slots, **characterized in that**, the baseband processing chip is used, in response to the situation that a first SIM in an on-network state is required to process a high real time service, to identify whether packet switched PS domain data being received/transmitted in a PS domain service current processed on a second SIM is the critical data for maintaining the QoS level of the PS domain service, wherein the on-network state is a state in which the mobile terminal acquired synchronization information of a cell, and wherein the high real time service has higher requirement to real-time processing than the PS domain service, and the first SIM and the second SIM belong to multiple SIMs inserted in the same mobile terminal; and in response to the situation that the PS domain data being received/transmitted is non-critical data, suspending the processing of the PS domain service and process the high real time service.

18. The mobile terminal according to claim 17, **characterized in that**, the baseband processing chip comprises the baseband processing chip of any one of claims 10 to 16.

## Patentansprüche

1. Verfahren zur Dienstverarbeitung in einem mobilen Endgerät, wobei das Verfahren Folgendes aufweist:
als Reaktion auf die Situation, dass ein erstes Subscriber Identity Module, SIM, in einem netzgekoppelten Zustand einen hohen Echtzeitdienst verarbeiten muss, Identifizieren, ob paketvermittelte, PS, Domänendaten, die in einem aktuell in einer zweiten SIM verarbeiteten PS-Domänendienst empfangen/gesendet werden, die kritischen Daten zur Erhaltung des QoS-Niveaus des PS-Domänendienstes (101) sind, wobei der netzgekoppelte Zustand ein Zustand ist, in dem das mobile Endgerät Synchronisationsinformationen einer Zelle gewonnen hat, und wobei der hohe Echtzeitdienst eine höhere Echtzeitverarbeitungsanforderung als der PS-Domänendienst hat und die erste SIM und die zweite SIM zu mehreren SIMs gehören, die in dasselbe mobile Endgerät eingelegt sind;
als Reaktion auf die Situation, dass die PS-Domänendaten, die empfangen/gesendet werden, nichtkritische Daten sind, Aussetzen der Verarbeitung des PS-Domänendienstes und Verarbeiten des hohen Echtzeitdienstes (102).

2. Verfahren nach Anspruch 1, die ferner Folgendes aufweist:
als Reaktion auf die Situation, dass es unter den mehreren SIMs eine dritte SIM in einem nicht netzgekoppelten Zustand gibt, Durchführen von Leistungsscan und Netzsuche für die dritte SIM, wobei der nicht netzgekoppelte Zustand ein Zustand ist, in dem das mobile Endgerät die Synchronisation mit einem Netz verloren hat, und wobei der Leistungsscan ein Vorgang ist, der zum Verkürzen der für die Netzsuche durch das mobile Endgerät benötigten Zeit ausgeführt wird.

3. Verfahren nach Anspruch 2, das ferner das Durchführen von Leistungsscan und Netzsuche für die dritte SIM aufweist, das Folgendes aufweist:
Durchführen von Leistungsscan und Netzsuche für die dritte SIM in einem Leerlaufschlitz oder Leerlaufrahmen während der Verarbeitung des PS-Domänendienstes oder
als Reaktion auf die Situation, dass die PS-Domänendaten, die empfangen/gesendet werden, nichtkritische Daten sind, Aussetzen der Verarbeitung des PS-Domänendienstes und Durchführen von Leistungsscan und Netzsuche für die dritte SIM (503).

4. Verfahren nach Anspruch 3, das ferner den Empfang/das Senden der kritischen Daten vor dem Leistungsscan und der Netzsuche für die dritte SIM aufweist.

5. Verfahren nach einem der Ansprüche 1 bis 4, bei dem der hohe Echtzeitdienst einen leitungsvermittelten, CS, Domänendienst aufweist, wobei der CS-Domänendienst eine CS-Domänen-Paging-Nachricht aufweist;
ein CS-Domänendienst, der verarbeiten muss, aufweist, dass die von einer Paging-Periode vorgegebene Zeit für einen Paging-Nachrichtenempfang erreicht wird oder ein Paging-Anzeiger anzeigt, dass er eine Paging-Nachricht empfangen muss;
das Verarbeiten des CS-Domänendienstes das Empfangen und Verarbeiten der CS-Domänen-Paginng-Nachricht aufweist.

6. Verfahren nach Anspruch 5, bei dem das Empfangen und Verarbeiten der CS-Domänen-Paging-Nachricht Folgendes aufweist:
Empfangen der CS-Domänen-Paging-Nachricht an der ersten SIM;
gemäß den Informationen in der CS-Domänen-Paging-Nachricht (203) Identifizieren, ob die erste SIM eine Rundrufnachricht empfangen oder einen CS-Domänenkommunikationsdienst verarbeiten muss;
als Reaktion auf die Situation, dass die erste SIM eine Rundrufnachricht empfangen muss, Empfangen und Verarbeiten der Rundrufnachricht an der ersten SIM (204);
als Reaktion auf die Situation, dass die erste SIM einen CS-Domänenkommunikationsdienst verarbeiten muss, Verarbeiten des CS-Domänenkommunikationsdienstes an der ersten SIM (205).

7. Verfahren nach Anspruch 6, bei dem das Empfangen und Verarbeiten der Rundrufnachricht an der ersten SIM Folgendes aufweist:
Empfangen der Rundrufnachricht an der ersten SIM und Identifizieren gemäß den Informationen in der Rundrufnachricht (303), ob sich der Aufenthaltsbereich, in dem sich das mobile Endgerät befindet, geändert hat;
als Reaktion auf die Situation, dass sich der Aufenthaltsbereich, in dem sich das mobile Endgerät befindet, geändert hat, Durchführen einer Aufenthaltsbereichsaktualisierung für die erste SIM (304).

8. Verfahren nach einem der Ansprüche 1 bis 4, bei dem der hohe Echtzeitdienst einen leitungsvermittelten, CS, Domänendienst aufweist, wobei der CS-Domänendienst Folgendes aufweist: eine Rundrufnachricht oder eine Aufenthaltsbereichsaktualisierung;
wobei der CS-Domänendienst, der verarbeiten muss, Folgendes aufweist: gemäß einem in einem Kommunikationsprotokoll vorgegebenen Zeitintervall die Zeit für einen Rundrufnachrichtenempfang oder die Zeit für die Aufenthaltsbereichsaktualisierung wird erreicht;
Verarbeiten des CS-Domänendienstes weist das Empfangen und Verarbeiten der Rundrufnachricht auf der ersten SIM oder das Durchführen einer Aufenthaltsbereichsaktualisierung für die erste SIM auf.

9. Verfahren nach Anspruch 8, bei dem das Empfangen und Verarbeiten der Rundrufnachricht an der ersten SIM Folgendes aufweist:
Empfangen der Rundrufnachricht an der ersten SIM und gemäß den Informationen in der Rundrufnachricht (303) Identifizieren, ob sich der Aufenthaltsbereich, in dem sich das mobile Endgerät befindet, geändert hat;
als Reaktion auf die Situation, dass sich der Aufenthaltsbereich, in dem sich das mobile Endgerät befindet, geändert hat, Durchführen einer Aufenthaltsbereichsaktualisierung für die erste SIM (304).

10. Basisbandverarbeitungschip, der Folgendes aufweist:
eine erste Dienstverarbeitungseinheit (601) zum Verarbeiten eines paketvermittelten, CS, Domänendienstes an einem zweiten Subscriber Identity Module, SIM, unter mehreren SIMs, die in dasselbe mobile Endgerät eingelegt sind;
eine erste Überwachungseinheit (602) zum Überwachen, ob es unter den mehreren SIMs eine erste SIM in einem netzgekoppelten Zustand gibt, die einen hohen Echtzeitdienst verarbeiten muss, wobei der netzgekoppelte Zustand ein Zustand ist, in dem das mobile Endgerät Synchronisationsinformationen einer Zelle gewonnen hat, und wobei der hohe Echtzeitdienst eine höhere Echtzeitverarbeitungsanforderung als der PS-Domänendienst hat;
eine erste Identifikationseinheit (603) zum Identifizieren gemäß dem Überwachungsergebnis der ersten Überwachungseinheit als Reaktion auf die Situation, dass die erste SIM in einem netzgekoppelten Zustand einen hohen Echtzeitdienst verarbeiten muss, ob PS-Domänendaten, die in dem PS-Domänendienst empfangen/gesendet werden, die kritischen Daten zur Erhaltung des QoS-Niveaus des PS-Domänendienstes sind;
eine Scheduling-Einheit (604) zum Anweisen der ersten Dienstverarbeitungseinheit (601) gemäß den Identifikationsergebnissen der ersten Identifikationseinheit als Reaktion auf die Situation, dass die PS-Domänendaten, die empfangen/gesendet werden, nichtkritische Daten sind, zum Aussetzen der Verarbeitung des PS-Domänendienstes und zum Anweisen einer zweiten Dienstverarbeitungseinheit (604) zum Verarbeiten des hohen Echtzeitdienstes;
eine zweite Dienstverarbeitungseinheit (605) zum Verarbeiten des hohen Echtzeitdienstes an der ersten SIM gemäß den Anweisungen der Scheduling-Einheit (604).

11. Basisbandverarbeitungschip nach Anspruch 10, der ferner Folgendes aufweist:
eine zweite Überwachungseinheit (606) zum Überwachen, ob es unter den mehreren SIM eine dritte SIM in einem nicht netzgekoppelten Zustand gibt, wobei der nicht netzgekoppelte Zustand ein Zustand ist, in dem das mobile Endgerät die Synchronisation mit einem Netz verlor, und wobei der Leistungsscan ein Vorgang ist, der zum Verkürzen der für die Netzsuche durch das mobile Endgerät benötigten Zeit ausgeführt wird;
die Scheduling-Einheit (604), ferner zum Anweisen der Synchronisationseinheit (607) gemäß dem Überwachungsergebnis der zweiten Überwachungseinheit als Reaktion auf die Situation, dass es unter den mehreren SIMs eine dritte SIM in einem nicht netzgekoppelten Zustand gibt, zum Durchführen von Leistungsscan und Netzsuche für die dritte SIM;
eine Synchronisationseinheit (607) zum Durchführen von Leistungsscan und Netzsuche für die dritte SIM gemäß der Anweisung der Scheduling-Einheit.

12. Basisbandverarbeitungschip nach Anspruch 11, bei dem die Scheduling-Einheit (604) speziell verwendet wird zum Anweisen der Synchronisationseinheit (607) als Reaktion auf die Situation, dass es unter den mehreren SIMs eine dritte SIM in einem nicht netzgekoppelten Zustand gibt, zum Durchführen von Leistungsscan und Netzsuche für die dritte SIM in einem Leerlaufschlitz oder einem Leerlaufrahmen während der Verarbeitung des PS-Domänendienstes durch die erste Dienstverarbeitungseinheit (601); oder
Anweisen der ersten Dienstverarbeitungseinheit (601) als Reaktion auf die Situation, dass die PS-Domänendaten, die empfangen/gesendet werden, nichtkritische Daten sind, zum Aussetzen der Verarbeitung des PS-Domänendienstes und Durchführen von Leistungsscan und Netzsuche für die dritte SIM.

13. Basisbandverarbeitungschip nach einem der Ansprüche 10 bis 12, bei dem der hohe Echtzeitdienst einen CS-Domänendienst aufweist, wobei der CS-Domänendienst eine CS-Domänen-Paging-Nachricht aufweist;
die erste SIM die CS-Domänen-Paging-Nachricht verarbeiten muss, wenn die von einer Pagingperiode vorgegebene Zeit für einen Pagingnachrichtenempfang erreicht wird oder wenn ein Paginganzeiger anzeigt, dass er eine Pagingnachricht empfangen muss;
die zweite Dienstverarbeitungseinheit (605) speziell zum Empfangen und Verarbeiten der CS-Domänen-Paging-Nachricht an der ersten SIM gemäß der Anweisung der Scheduling-Einheit verwendet wird.

14. Basisbandverarbeitungschip nach Anspruch 13, bei dem beim Empfangen und Verarbeiten der CS-Domänen-Paging-Nachricht die zweite Dienstverarbeitungseinheit (605) speziell verwendet wird zum Empfangen der CS-Domänen-Paging-Nachricht an der ersten SIM verwendet wird; Identifizieren gemäß den Informationen in der CS-Domänen-Paging-Nachricht, ob die erste SIM eine Rundrufnachricht empfangen oder einen CS-Domänenkommunikationsdienst verarbeiten muss; als Reaktion auf die Situation, dass die erste SIM eine Rundrufnachricht empfangen muss, Empfangen und Verarbeiten der Rundrufnachricht an der ersten SIM; und als Reaktion auf die Situation, dass die erste SIM einen CS-Domänenkommunikationsdienst verarbeiten muss, Verarbeiten des CS-Domänenkommunikationsdienstes an der ersten SIM.

15. Basisbandverarbeitungschip nach Anspruch 14, bei dem beim Empfangen und Verarbeiten der Rundrufnachricht an der ersten SIM die zweite Dienstverarbeitungseinheit (605) speziell verwendet wird zum Empfangen der Rundrufnachricht an der ersten SIM und zum Identifizieren gemäß den Informationen in der Rundrufnachricht, ob der Aufenthaltsbereich, in dem sich das mobile Endgerät befindet, sich verändert hat; und als Reaktion auf die Situation, dass sich der Aufenthaltsbereich, in dem sich das mobile Endgerät befindet, geändert hat, Durchführen einer Aufenthaltsbereichsaktualisierung für die erste SIM.

16. Basisbandverarbeitungschip nach einem der Ansprüche 10 bis 12, bei dem der hohe Echtzeitdienst einen CS-Domänendienst aufweist, wobei der CS-Domänendienst eine Rundrufnachricht oder eine Aufenthaltsbereichsaktualisierung aufweist;
die erste SIM eine Rundrufnachricht empfangen muss oder eine Aufenthaltsbereichsaktualisierung durchführen muss, wenn, gemäß einem in einem Kommunikationsprotokoll vorgegebenen Zeitintervall, die Zeit für einen Rundrufnachrichtenempfang oder die Zeit für die Aufenthaltsbereichsaktualisierung erreicht wird;
gemäß der Anweisung der Scheduling-Einheit (604), die zweite Dienstverarbeitungseinheit (605) speziell verwendet wird zum Empfangen und Verarbeiten der Rundrufnachricht an der ersten SIM oder zum Durchführen einer Aufenthaltsbereichsaktualisierung für die erste SIM.

17. Mobiles Endgerät, das einen HF-Chip, einen Basisbandverarbeitungschip und mehrere Subscriber Identity Module-, SIM, -Steckplätze aufweist, **dadurch gekennzeichnet, dass** der Basisbandverarbeitungschip als Reaktion auf die Situation, dass eine erste SIM in einem netzgekoppelten Zustand einen hohen Echtzeitdienst verarbeiten muss, zum Identifizieren verwendet wird, ob paketvermittelte, PS, Domänendaten, die in einem aktuell in einer zweiten SIM verarbeiteten PS-Domänendienst empfangen/gesendet werden, die kritischen Daten zur Erhaltung des QoS-Niveaus des PS-Domänendienstes sind, wobei der netzgekoppelte Zustand ein Zustand ist, in dem das mobile Endgerät Synchronisationsinformationen einer Zelle gewonnen hat, und wobei der hohe Echtzeitdienst eine höhere Echtzeitverarbeitungsanforderung als der PS-Domänendienst hat und die erste SIM und die zweite SIM zu mehreren SIMs gehören, die in dasselbe mobile Endgerät eingesetzt sind; und als Reaktion auf die Situation, dass die PS-Domänendaten, die empfangen/gesendet werden, nichtkritische Daten sind, die Verarbeitung des PS-Domänendienstes ausgesetzt und der hohe Echtzeitdienst verarbeitet wird.

18. Mobiles Endgerät nach Anspruch 17, **dadurch gekennzeichnet, dass** der Basisbandverarbeitungschip den Basisbandverarbeitungschip nach einem der Ansprüche 10 bis 16 umfasst.

## Revendications

1. Procédé de traitement de service dans un terminal mobile, ce procédé comprenant des étapes consistant à :
en réponse à une situation dans laquelle un premier module d'authentification d'identité d'abonné SIM dans un état branché sur le réseau est nécessaire pour traiter un service de haute priorité en temps réel, identifier si des données dans le domaine de commutation de paquets PS qui sont reçues / transmises dans un service dans le domaine PS en cours de traitement sur un second SIM sont ou non des données essentielles pour maintenir le niveau de qualité du service dans le domaine PS (101), l'état branché sur le réseau étant un état dans lequel le terminal mobile a acquis une information de synchronisation d'une cellule, et le service de haute priorité en temps réel allant au-delà des exigences de traitement en temps réel du service dans le domaine PS, et le premier SIM et le second SIM appartenant à un ensemble de SIM insérés dans le même terminal mobile, et
en réponse à une situation dans laquelle les données dans le domaine PS reçues / transmises ne sont pas des données essentielles, suspendre le traitement du service dans le domaine PS et traiter le service de haute priorité en temps réel (102).

2. Procédé conforme à la revendication 1,
comprenant en outre les étapes suivantes consistant à :
en réponse à une situation dans laquelle il y a un troisième SIM dans un état non branché sur réseau parmi l'ensemble de SIM, effectuer une recherche de puissance et une recherche de réseau pour le troisième SIM, l'état non branché sur le réseau étant un état dans lequel le terminal mobile a perdu sa synchronisation avec le réseau, et la recherche de puissance étant une opération qui est exécutée pour diminuer le temps nécessaire pour effectuer une recherche de réseau par le terminal mobile.

3. Procédé conforme à la revendication 2,
selon lequel l'étape consistant à :
effectuer une recherche de puissance et une recherche de réseau pour le troisième SIM comprend des étapes consistant à :
effectuer une recherche de puissance et une recherche de réseau pour le troisième SIM dans un créneau ou une trame libre au cours du traitement du service dans le domaine PS, ou
en réponse à une situation dans laquelle les données dans le domaine PS reçues / transmises ne sont pas des données essentielles, suspendre le traitement du service dans le domaine PS et effectuer une recherche de puissance et une recherche de réseau pour le troisième SIM (503).

4. Procédé conforme à la revendication 3,
comprenant en outre la réception / transmission des données essentielles avant la recherche de puissance et la recherche de réseau pour le troisième SIM.

5. Procédé conforme à l'une quelconque des revendications 1 à 4, selon lequel le service de haute priorité en temps réel comprend un service dans le domaine de commutation de circuits CS, ce service dans le domaine CS comprenant un message d'appel dans le domaine CS, un service dans le domaine CS nécessaire pour le traitement comprend l'achèvement du temps nécessaire pour la réception d'un message d'appel indiqué par une période d'appel ou un indicateur d'appel indique qu'il est nécessaire de recevoir un message d'appel,
le traitement du service dans le domaine CS comprend la réception et le traitement du message d'appel dans le domaine CS.

6. Procédé conforme à la revendication 5,
selon lequel la réception et le traitement du message d'appel dans le domaine CS comprennent des étapes consistant à :
recevoir le message d'appel dans le domaine CS sur le premier SIM, identifier si le premier SIM est nécessaire pour recevoir un message diffusé ou pour traiter un service de communication dans le domaine CS selon l'information du message d'appel dans le domaine CS (203),
en réponse à une situation dans laquelle le premier SIM est nécessaire pour recevoir un message diffusé, recevoir et traiter le message diffusé sur le premier SIM (204),
en réponse à une situation dans laquelle le premier SIM est nécessaire pour traiter un service de communication dans le domaine CS, traiter le service de communication dans le domaine CS sur le premier SIM (205).

7. Procédé conforme à la revendication 6,
selon lequel la réception et le traitement du message diffusé sur le premier SIM comprend des étapes consistant à :
recevoir le message diffusé sur le premier SIM et identifier si la zone dans laquelle le terminal mobile est localisé a changé selon l'information du message diffusé (303),
en réponse à une situation dans laquelle la zone dans laquelle le terminal mobile est localisé a changé, effectuer une mise à jour de la zone de localisation du premier SIM (304).

8. Procédé conforme à l'une quelconque des revendications 1 à 4, selon lequel le service de haute priorité en temps réel comprend un service dans le domaine de commutation de circuits CS, ce service dans le domaine CS comprenant : un message diffusé ou une mise à jour de zone de localisation,
le service dans le domaine CS nécessaire pour effectuer le traitement comprend : selon un intervalle de temps indiqué dans un protocole de communication, l'achèvement du temps nécessaire pour la réception d'un message diffusé ou le temps nécessaire pour la mise à jour de la zone de localisation,
le traitement dans le service de domaine CS comprend la réception et le traitement du message diffusé sur le premier SIM, ou la mise en oeuvre de la mise à jour de la zone de localisation du premier SIM.

9. Procédé conforme à la revendication 8,
selon lequel la réception et le traitement du message diffusé sur le premier SIM comprend :
la réception du message diffusé sur le premier SIM et le fait d'identifier si la zone dans laquelle le terminal mobile est localisé a changé selon l'information du message diffusé (303),
en réponse à une situation dans laquelle la zone dans laquelle le terminal mobile est localisé a changé effectuer une mise à jour de la zone de localisation du premier SIM (304).

10. Puce de traitement dans la bande de base comprenant :
une première unité de traitement de service (601) permettant de traiter un service dans le domaine de commutation de paquets PS sur un second module d'authentification d'identité d'abonné SIM parmi un ensemble de SIM insérés dans le même terminal mobile,
une première unité de surveillance (602) pour surveiller s'il y a un premier SIM dans un état branché sur le réseau parmi l'ensemble de SIM nécessaire pour traiter un service de haute priorité en temps réel,
l'état branché sur le réseau étant un état dans lequel le terminal mobile a acquis une information de synchronisation d'une cellule, et le service de haute priorité en temps réel allant au-delà des exigences de traitement en temps réel du service dans le domaine PS,
une première unité d'identification (603) pour, selon le résultat de surveillance de la première unité de surveillance, en réponse à une situation dans laquelle le premier SIM dans un état branché sur le réseau est nécessaire pour traiter un service de haute priorité en temps réel,
identifier si des données dans le domaine PS qui sont reçues / transmises dans le service dans le domaine PS sont des données essentielles pour permettre de maintenir le niveau de qualité du service dans le domaine PS,
une unité d'ordonnancement (604), pour, selon le résultat d'identification de la première unité d'identification, en réponse à une situation dans laquelle les données dans le domaine PS qui sont reçues / transmises ne sont pas des données essentielles, donner instruction à la première unité de traitement de service (601) de suspendre le traitement du service dans le domaine PS et donner instruction à une seconde unité de traitement de service (605) de traiter le service de haute priorité en temps réel,
une seconde unité de traitement de service (605) pour traiter le service de haute priorité en temps réel sur le premier SIM selon l'instruction de l'unité d'ordonnancement (604).

11. Puce de traitement dans la bande de base conforme à la revendication 10,
comprenant en outre :
une seconde unité de surveillance (606) pour surveiller s'il y a un troisième SIM dans un état non branché sur le réseau parmi l'ensemble de SIM, l'état non branché sur le réseau étant un état dans lequel le terminal mobile a perdu sa synchronisation avec le réseau, et la recherche de puissance étant une opération qui est exécutée pour diminuer le temps nécessaire pour effectuer une recherche de réseau par le terminal mobile,
l'unité d'ordonnancement (604) étant en outre réalisée pour, selon le résultat de surveillance de la seconde unité de surveillance, en réponse à une situation dans laquelle il y a un troisième SIM dans un état non branché sur le réseau parmi l'ensemble de SIM, donner instruction à l'unité de synchronisation (607) d'effectuer une recherche de puissance et une recherche de réseau pour le troisième SIM,
une unité de synchronisation (607) réalisée pour effectuer une recherche de puissance et une recherche de réseau pour le troisième SIM selon l'instruction de l'unité d'ordonnancement.

12. Puce de traitement dans la bande de base conforme à la revendication 11, dans laquelle l'unité d'ordonnancement (604) est en particulier utilisée pour, en réponse à une situation dans laquelle il y a un troisième SIM dans un état non branché sur le réseau parmi l'ensemble de SIM, donner instruction à l'unité de synchronisation (607) d'effectuer une recherche de puissance et une recherche de réseau pour le troisième SIM dans un créneau ou une trame libre au cours du traitement du service dans le domaine PS par la première unité de traitement de service (601), ou
en réponse à une situation dans laquelle les données dans le domaine PS qui sont reçues / transmises ne sont pas des données essentiellement, donner instruction à la première unité de traitement de service (601) de suspendre le traitement du service dans le domaine PS et d'effectuer une recherche de puissance et une recherche de réseau pour le troisième SIM.

13. Puce de traitement dans la bande de base conforme à l'une quelconque des revendications 10 à 12, dans laquelle le service de haute priorité en temps réel comprend un service dans le domaine CS, ce service dans le domaine CS comprenant un message d'appel dans le domaine CS,
le premier SIM est nécessaire pour traiter le message d'appel dans le domaine CS lorsque le temps nécessaire pour la réception d'un message d'appel nécessaire par une période d'appel est achevé, ou lorsqu'un indicateur d'appel indique qu'il est nécessaire de recevoir un message d'appel,
la seconde unité de traitement de service (605) étant en particulier utilisée pour recevoir et traiter le message d'appel dans le domaine CS sur le premier SIM selon l'instruction de l'unité d'ordonnancement.

14. Puce de traitement dans la bande de base conforme à la revendication 13,
dans laquelle, lors de la réception et du traitement du message d'appel dans le domaine CS, la seconde unité de traitement de service (605) est en particulier utilisée pour recevoir le message d'appel dans le domaine CS sur le premier SIM, identifier si le premier SIM est nécessaire pour recevoir un message diffusé ou pour traiter un service de communication dans le domaine CS selon l'information du message d'appel dans le domaine CS, en réponse à une situation dans laquelle le premier SIM est nécessaire pour recevoir un message diffusé, recevoir et traiter le message diffusé sur le premier SIM, et en réponse à une situation dans laquelle le premier SIM est nécessaire pour traiter un service de communication dans le domaine CS, traiter le service de communication dans le domaine CS sur le premier SIM.

15. Puce de traitement dans la bande de base conforme à la revendication 14,
dans lequel, lors de la réception et du traitement du message diffusé sur le premier SIM, la seconde unité de traitement de service (605) est en particulier utilisée pour recevoir le message diffusé sur le premier SIM et pour identifier si la zone dans laquelle le terminal mobile est localisé a changé selon l'information du message diffusé, et en réponse à une situation dans laquelle la zone dans laquelle le terminal mobile est localisé a changé, effectuer une mise à jour de la zone de localisation du premier SIM.

16. Puce de traitement dans la bande de base conforme à l'une quelconque des revendications 10 à 12, dans laquelle le service de haute priorité en temps réel comprend un service dans le domaine CS, ce service dans le domaine CS comprenant un message diffusé, ou une mise à jour de zone de localisation,
le premier SIM est nécessaire pour recevoir un message diffusé ou pour effectuer une mise à jour de la zone de localisation lorsque, selon un intervalle de temps indiqué dans un protocole de communication, le temps de réception du message diffusé ou le temps de mise à jour de la zone de localisation est terminé,
selon l'instruction de l'unité d'ordonnancement (604), la seconde unité de traitement de service (605) est en particulier utilisée pour recevoir et traiter le message diffusé sur le premier SIM ou pour effectuer la mise à jour de la zone de localisation du premier SIM.

17. Terminal mobile comprenant une puce RF, une puce de traitement dans la bande de base, et plusieurs créneaux de modules d'authentification d'identité d'abonné SIM,
**caractérisé en ce que**
la puce de traitement dans la bande de base est utilisée, en réponse à une situation dans laquelle un premier SIM dans un état branché sur le réseau est nécessaire pour traiter un service de haute priorité en temps réel, pour identifier si des données dans le domaine de commutation de paquets PS qui sont reçues / transmises dans un service dans le domaine PS en cours de traitement sur un second SIM sont des données essentielles pour maintenir le niveau de qualité du service dans le domaine PS, l'état branché sur le réseau étant un état dans lequel le terminal mobile à acquis une information de synchronisation d'une cellule, et le service de haute priorité en temps réel allant au-delà des exigences de traitement en temps réel du service dans le domaine PS, et le premier SIM et le second SIM appartenant à un ensemble de SIM insérés dans le même terminal mobile, et, en réponse à une situation dans laquelle les données dans le domaine PS qui sont reçues / transmises ne sont pas des données essentielles, suspendre le traitement du service dans le domaine PS et traiter le service de haute priorité en temps réel.

18. Terminal mobile conforme à la revendication 17,
**caractérisé en ce que**
la puce de traitement dans la bande de base comprend une puce de traitement dans la bande de base conforme à l'une quelconque des revendications 10 à 16.
